# EUROPEAN PATENT APPLICATION

(11) **EP 2 163 565 A1**
(43) Date of publication of application: **17.03.2010**
(21) Application number: 08790131.0
(22) Date of filing: 02.07.2008
(51) Int. Cl.: C08F 32/08, B05D 1/40, B29C 45/00, B29C 59/02

(54) **RESIN FOR THERMAL IMPRINTING, RESIN SOLUTION FOR THERMAL IMPRINTING, INJECTION MOLDED BODY FOR THERMAL IMPRINTING, THIN FILM FOR THERMAL IMPRINTING, AND PROCESS FOR PRODUCING THE THIN FILM**

(30) Priority: 04.07.2007 JP 2007176062
(71) Applicant: MARUZEN PETROCHEMICAL CO., LTD., Chuo-ku, Tokyo 104-8502 (JP); Scivax Corporation, Kanagawa 2130012 (JP)
(72) Inventor: SATSUKA, Takuro, Ichihara-shi Chiba 290-0045 (JP); TAKAYA, Yoshiaki, Ichihara-shi Chiba 290-0045 (JP); KUSUURA, Takahisa, Kawaski-shi Kanagawa 213-0012 (JP); MITRA, Anupam, Kawaski-shi Kanagawa 213-0012 (JP)
(74) Representative: Gille Hrabal Struck Neidlein Prop Roos
(86) International application number: PCT/JP2008/001732
(87) International publication number: WO 2009/004797

(57) **Abstract**

There are provided a thermal-imprinting resin which has a good heat-deterioration tolerability and a low resin elastic modulus at the time of fluidization in order to suppress any production of particle-like materials in microfabrication by thermal imprinting, and has a good fine-pattern transfer characteristic, a thermal-imprinting-resin solution using the same, a thermal-imprinting injection-molded body using the same, a thermal-imprinting thin film using the same and a production method thereof. The thermal-imprinting resin has an exothermic onset temperature (oxidation onset temperature) of an exothermic peak due to oxidation greater than or equal to + 35 °C to the glass transition temperature of the resin in differential scanning calorimetric measurement at a temperature rise rate of 5 °C/min in air, and has a complex modulus less than 0.24 MPa at the glass transition temperature of the resin + 35 °C in a dynamic viscoelastic modulus measurement at a frequency of 1 rad/sec in nitrogen stream. The thermal-imprinting-resin solution, the thermal-imprinting injection-molded body, the thermal-imprinting thin film and the production method thereof use the foregoing resin.

## Description

### Technical Field

The present invention relates to a thermal-imprinting resin, a thermal-imprinting-resin solution, a thermal-imprinting injection-molded body and a thermal-imprinting thin film which have extremely little particle-like materials produced on a resin surface by resin deterioration and have a good pattern transfer precision in microfabrication through thermal imprinting, and a manufacturing method of same.

### Background Art

It becomes requisite for optical resin materials to ensure both performances and costs in accordance with the significant development of various optical device fields including optical communications, optical disks, displays and optical sensors and the like. In fields of biochips and microreactors, expectations for transparent resin materials which are easy to process in various forms are growing instead of glasses. In any fields, processes of a surface of a base material, in particular, microfabrication becomes requisite, and such microfabrication technologies become important in the field of semiconductors in which integration is remarkably advanced nowadays.

Conventionally, adopted in order to form a fine pattern on a surface of a transparent material is a technique of mechanically cutting the surface or a technique of printing the pattern thereon using a resist, or a thermal, ultraviolet, or electron beam curing resin. However, mechanical cutting has a problem that highly-advanced and cumbersome processing technologies are requisite, and pattern printing using a resist or the like has problems such that procedures thereof are complicated and the durability is poor due to peeling of the printed pattern. Moreover, it becomes requisite to control the whole process highly precisely in accordance with refinement of the pattern, so that costs in manufacturing of various devices become non-negligible.

On the other hand, there is proposed a thermal imprinting technique which forms a fine pattern at a low cost. That is, a mold having a fine pattern and heated at a temperature higher than or equal to the glass transition temperature of a resin is pressed against the surface of the resin, and the fine pattern of the mold is transferred to the melted resin surface (see, for example, patent literature 1).

Examples of a resin material used for thermal imprinting are a (metha) acrylate resin represented by polymethacrylic acid (PMMA) resin or a polycarbonate resin. Moreover, there is known a cyclic olefin-based thermoplastic resin which has both thermostability and dimension stability by a low water absorption coefficient (see, for example, non-patent literature 1).

However, the conventional resins have a problem such that particle-like materials are produced on a resin surface in microfabrication through thermal imprinting, resulting in pattern transfer failure, demolding failure, mold contamination, and the like.

Patent Literature 1: U.S. Patent No. 5772905
Non-patent Literature 1: J. Mater. Chem., 2000, vol. 10, p 2634

### Disclosure of Invention

### Problem to be Solved by the Invention

It is presumed that an oxidation reaction, a decomposition and cross-linking reaction of a resin surface occur at the time of transferring a pattern under a high temperature and a high pressure and gel constituents are produced, resulting in production of the foregoing particle-like materials. Moreover, when the flowability of a resin is poor, the conditions of pattern transferring becomes a higher temperature and a higher pressure, and particle-like materials are likely to be produced because of deterioration of the resin, so that there is a need for thermal-imprinting materials to improve the heat-deterioration tolerability and the flowability.

The present invention has been made in view of the foregoing problems, and it is an object of the present invention to provide a thermal-imprinting resin which has a superior heat-deterioration tolerability in order to suppress any production of particle-like materials in microfabrication through thermal imprinting and has a low resin elastic modulus at the time of fluidization, a thermal-imprinting-resin solution using the same, a thermal-imprinting injection-molded body using the same, a thermal-imprinting thin film using the same and a method of producing such a thin film.

### Means for Solving the Problem

The inventors of the present invention keenly studied in order to accomplish the object, and found that if an oxidation onset temperature (an exothermic onset temperature at an exothermic peak due to oxidation in differential scanning calorimetric measurement in air at a rate of temperature rise of 5 °C/min) of a resin which is a process object is set to be higher than a molding temperature of thermal imprinting, particle-like materials to be produced become extremely little, and the pattern transfer characteristic becomes superior, and accomplished the present invention.

That is, a thermal-imprinting resin of the present invention is used for thermal imprinting, and wherein an exothermic onset temperature (oxidation onset temperature) at an exothermic peak due to oxidation is higher than or equal to a glass transition temperature of the resin + 35 °C in air in differential scanning calorimetric measurement at a rate of temperature rise of 5 °C/min.

In this case, it is preferable that the foregoing thermal-imprinting resin should be formed of a cyclic olefin-based resin, and further preferably, should contain at least one repeating unit represented by a formula (1).

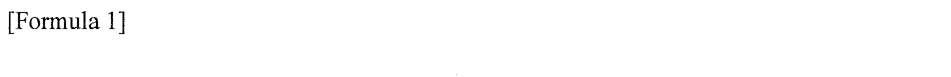

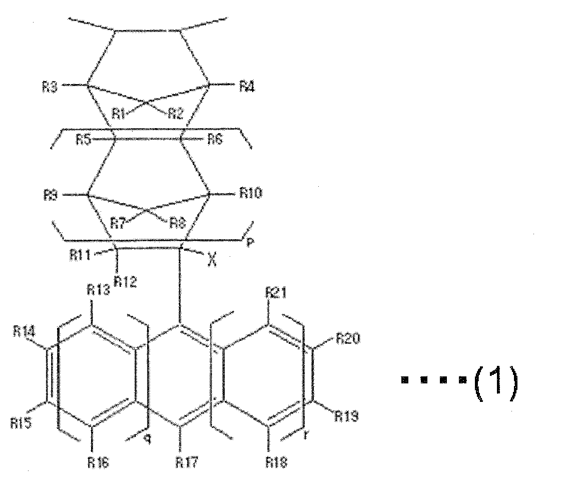

(where X in the formula (1) is a halogen atom or a hydrocarbon group having a carbon number of 1 to 12. X and R21 (or R20) may be bound together through an alkylene group. p, q, r are 0, 1, or 2. R1 to R21 are individually a hydrogen atom, a halogen atom, an aliphatic hydrocarbon group, and an alicyclic hydrocarbon group. R11 (or R12) and R13 (or R14) may be bound together through an alkylene group having a carbon number of 1 to 5, and may be bound directly together without any group. However, when R11 (or R12) and R13 (or R14) are bound together without any group, R11 (or R12) which is a residue not subjected to binging is a halogen atom or a hydrocarbon group having a carbon number of 1 to 12, and R13 (or R14) which is also a residue not subjected to binding is a hydrogen atom, a halogen atom, an aliphatic hydrocarbon group, or an alicyclic hydrocarbon group)

It is preferable that the foregoing thermal-imprinting resin should have a complex modulus at the glass transition temperature of the resin + 35 °C less than 0.24 MPa in dynamic viscoelastic modulus measurement at a frequency of 1 rad/sec in nitrogen stream.

A thermal-imprinting-resin solution of the present invention comprises the foregoing thermal-imprinting resin and greater than or equal to at least one kind of solvent which can dissolve the resin.

The thermal-imprinting-resin solution is for forming a thin film used for thermal imprinting, and wherein a containing amount of foreign particles each having a grain diameter of larger than or equal to 0.2 µm is less than 3000 particles/cm³.

The foregoing thermal-imprinting-resin solution has undergone filtration by a filter having pores each having a diameter of less than 0.8 µm.

A thermal-imprinting injection-molded body of the present invention is produced from the foregoing thermal-imprinting resin.

A thermal-imprinting thin film of the present invention is produced from the thermal-imprinting resin. In this case, it may be produced from the foregoing thermal-imprinting-resin solution.

The thermal-imprinting thin film of the present invention should have residual volatile components less than or equal to 0.25 %, and have a film thickness less than or equal to 40 µm from the standpoint of a thermal imprinting process.

A method of producing a thermal-imprinting-resin thin film of the present invention comprises: applying the thermal-imprinting-resin solution according to claim 5 on a support base material; and drying the thermal-imprinting-resin solution until residual volatile components become less than or equal to 0.25 %.

When the film thickness of the thin film is 10 nm to 4000 nm, and the thermal-imprinting-resin solution was applied by spin coating, the effect of the present invention becomes remarkable.

### Effect of the Present Invention

According to the thermal-imprinting resin, the thermal-imprinting-resin solution, the thermal-imprinting injection-molded body, the thermal-imprinting thin film and the production method thereof of the present invention, particle-like materials produced on a resin surface by resin deterioration are extremely little in microfabrication through thermal imprinting, and a good pattern transfer precision is acquired, thereby dramatically reducing pattern transfer failure, demolding failure, and mold contamination.

Moreover, when a thin film is formed from the thermal-imprinting-resin solution of the present invention, surface oxidation of a resin at the time of drying by heating is little, so that production of particle-like materials in a subsequent thermal imprinting step becomes extremely little.

### Brief Description of Drawings

FIG. 1 is a graph showing a measurement result of a resin of the present invention and that of a resin of a comparative example through differential scanning calorimetric analysis (DSC); and
FIG. 2 is a graph showing a complex modulus G of a resin of the present invention and that of a resin of a comparative example.

### Best Mode for Carrying Out the Invention

A thermal-imprinting resin of the present invention has a superior 5 oxidation-deterioration tolerability, and an exothermic onset temperature (hereinafter, oxidization onset temperature) thereof at an exothermic peak by an oxidation-deterioration reaction when measured at a rate of temperature rise of 5 °C/min from a room temperature in air stream is a glass transition temperature (Tg) + greater than or equal to 35 °C in differential scanning calorimetric measurement. In thermal imprinting, a surface of a resin which is a process object is heated at least within a range from Tg to Tg+35°C, so that if the oxidization onset temperature of the resin is adjusted to a glass transition temperature (tg) + greater than or equal to 35 °C, it is possible to suppress any production of particle-like materials produced by resin deterioration. Note that it is preferable that the oxidization onset temperature should be high as much as possible, preferably, should be a glass transition temperature (Tg) + greater than or equal to 50 °C, and more preferably, should be a glass transition temperature (Tg) + greater than or equal to 65 °C. In thermal imprinting, if an elastic modulus at the time of resin fluidization is low, a flowability at the time of imprinting becomes good, resulting in achievement of a good pattern transfer precision. Therefore, it is preferable that the resin of the present invention should have a complex modulus less than 0.24 MPa at the glass transition temperature of the resin + 35 °C in nitrogen stream through dynamic viscoelastic modulus measurement with a frequency of 1 rad/sec.

An example of such a thermal-imprinting resin is an aromatic-series-containing cyclic olefin-based copolymer which is a copolymer of α-olefin (monomer constituent [A]) having a carbon number greater than or equal to 2 and an aromatic-series-containing cyclic olefin (monomer constituent [B]) represented by a formula (2). Note that such an aromatic-series-containing cyclic olefin-based copolymer may be copolymerized with a cyclic olefin (monomer constituent [C]) represented by a formula (3) without deteriorating the foregoing oxidation-deterioration tolerability and low elastic modulus.

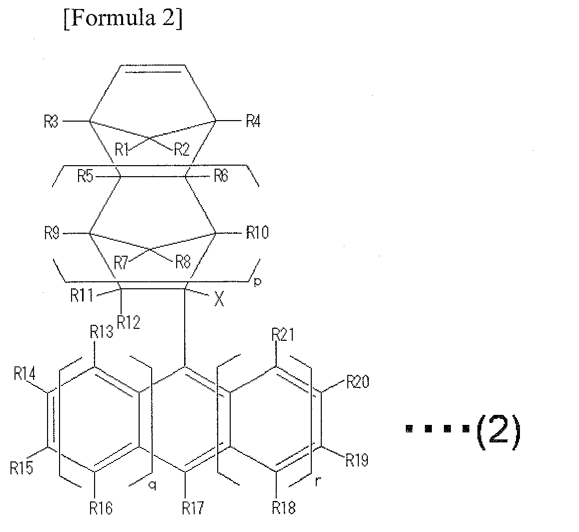

(where X, p, q, r, and R1 to R21 in the formula (2) are same ones defined in the formula (1)).

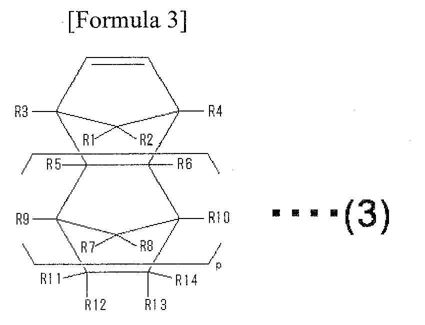

(where p and R1 to R14 in the formula (3) are defined as follows. p is 0, 1, or 2. R1 to R14 are individually a hydrogen atom, a halogen atom, an aliphatic hydrocarbon group, or an alicyclic hydrocarbon group. However, R12 and R13 may be monocyclic or polycyclic together with a carbon atom combined together, and such monocyclic or polycyclic bonding may be a double bonding.)

An example of the monomer constituent [A] is α-olefin having a carbon number of 2 to 20, preferably, 2 to 10, such as ethylene, propylene, 1-butene, 1-pentene, 3-methyl-1-butene, 3-methyl-1-pentene, 1-hexene, 1-octene, 1-decene, 1-dodecene, 1-tetradecene, 1-hexadecene, or 1-octadecene. Those can be used individually or can be combined together and used. Ethylene and propylene are preferable among those, and ethylene is more preferable.

Specific examples of the monomer constituent [B] (aromatic-series-containing cyclic olefin) represented by the formula (2) are 5-methyl-5-phenyl-bicyclo[2,2,1]hept-2-en, 5-ethyl-5-phenyl-bicyclo[2,2,1]hept-2-en, 5-n-propyl-5-phenyl-bicyclo[2,2,1]hept-2-en, 5-n-butyl-5-phenyl-bicyclo[2,2,1]hept-2-en, 5,6-dimethyl-5-phenyl-bicyclo[2,2,1]hept-2-en, 5-methyl-6-ethyl-5-phenyl-bicyclo[2,2,1]hept-2-en, 5,6,6'-trimethyl-5-phenyl-bicyclo[2,2,1]hept-2-en, 1,4,5-trimethyl-bicyclo[2,2,1]hept-2-en, 5,6-diethyl-5-phenyl-bicyclo[2,2,1]hept-2-en, 5-bromo-5-phenyl-bicyclo[2,2,1]hept-2-en, 5-chloro-5-phenyl-bicyclo[2,2,1]hept-2-en, 5-fluoro-5-phenyl-bicyclo[2,2,1]hept-2-en, 5-methyl-5-(tert-butylphenyl)-bicyclo[2,2,1]hept-2-en, 5-methyl-5-(bromophenyl)-bicycio[2,2,1]hept-2-en, 5-methyl-5-(chlorophenyl)-bicyclo[2,2,1]hept-2-en, 5-methyl-5-(fluorophenyl)-bicyclo[2,2,1]hept-2-en, 5-methyl-5-(α-naphtyl)bicyclo[2,2,1]hept-2-en, 5-methyl-5-anthracenyl-bicyclo[2,2,1]hept-2-en, 8-methyl-8-phenyl-tetracyclo[4,4,0,1^{2.5},1^{7.10}]-3-dodecene, 8-ethyl-8-phenyl-tetracyclo[4,4,0,1^{2.5},1^{7.10}]-3-dodecene, 8-n-propyl-8-phenyl-tetracyelo[4,4,0,1^{2.5},1^{7.10}]-3-dodecene, 8-n-butyl-8-phenyl-tetracyclo[4,4,0,1^{2 5},1^{7.10}]-3-dodecene, 8-chloro-8-phenyl-tetracyclo[4,4,0,1^{2.5},1^{7.10}]-3-dodecene, 11-methyl-11-phenyl-hexacyclo[6,6,1,1^{3.6},1^{10.13},0^{2.7},0^{9.14}]-4-heptadecene, and 1,4-methano-4a,9,9'-trimethyl-1,4,9a-trihydrofluorene.

Various kinds of those monomers can be acquired by causing a Diels-Alder reaction of a corresponding cyclopentadiene with aromatic-series-containing olefin.

Specific examples of the monomer constituent [C] (cyclic olefin) represented by the formula (3) and copolymerized with the monomer constituent [A] and the monomer constituent [B] represented by the formula (2) are bicyclo[2,2,1]hept-2-en, 5-methylbicyclo[2,2,1]hept-2-en, 7-methylbicyclo[2,2,1]hept-2-en, 5-ethylbicyclo[2,2,1]hept-2-en, 5-propylbicyclo[2,2,1]hept-2-en, 5-n-butylbicyclo[2,2,1]hept-2-en, 5-isobutylbicyclo[2,2,1]hept-2-en, 1,4-dimethylbicyclo[2,2,1]hept-2-en, 5-bromobicyclo[2,2,1]hept-2-en, 5-chlorobicyclo[2,2,1]hept-2-en, 5-fluorobicyclo[2,2,1]hept-2-en, 5,6-dimethylbicyclo[2,2,1]hept-2-en, dicyclopentadiene, tricyclopentadiene, tetracyclo[4,4,0,1^{2.5},1^{7.10}]-3-dodecene, 5,10-dimethyltetracyclo[4,4,0,1^{2.5},1^{7.10}]-3-dodecene, 2,10-dimethyltetracyclo[4,4,0,1^{2.5},1^{7.10}]-3-dodecene, 11,12-dimethyltetracyclo[4,4,0,1^{2.5},1^{7.10}]-3-dodecene, 2,79-trimethyltetracyclo[4,4,0,1^{2.5},1^{7.10}]-3-dodecene, 9-ethyl-2,7-dimethyltetracyelo[4,4,0,1^{2.5},1^{7.10}]-3-dodecene, 9-isobutyl-2,7-dimethyltetracyclo[4,4,0,1^{2.5},1^{7.10}]-3-dodecene, 9,11,12-trimethyltetracyclo[4,4,0,1^{2.5},1^{7.10}]-3-dodecene, 9-ethyl-11,12-dimethyltetracyclo[4,4,0,1^{2.5},1^{7.10}]-3-dodecene, 9-isobutyl-11,12-dimethyltetracyelo[4,4,0,1^{2.5},1^{7.10}]-3-dodecene, 5,8,9,10-tetramethyltetracyclo[4,4,0,1^{2.5},1^{7.10}]-3-dodecene, 8-hexyltetracyclo[4,4,0,1^{2.5},1^{7.10}]-3-dodecene, 8-stearyltetracyclo[4,4,0,1^{2.5},1^{7.10}]-3-dodecene, 8-methyl-9-ethyltetracyclo[4,4,0,1^{2.5},1^{7.10}]-3-dodecene, 8-cyclohexyltetracyclo[4,4,0,1^{2.5},1^{7.10}]-3-dodecene, 8-ethylidenetetracyclo[4,4,0,1^{2.5},1^{7.10}]-3-dodecene, 8-chlorotetracyclo[4,4,0,1^{2.5},1^{7.10}]-3-dodecene, 8-bromotetracyclo[4,4,0,1^{2.5},1^{7.10}]-3-dodecene,, 8-fluorotetracyclo[4,4,0,1^{2.5},1^{7.10}]-3-dodecene,, 8,9-dichlorotetracyclo[4,4,0,1^{2.5},1^{7.10}]-3-dodecene, hexacyclo[6,6,1,1^{3.6},1^{10.13},0^{2.7},0^{9.14}]-4-heptadecene, 12-methylhexacyclo[6,6,1,1^{3.6},1^{10.13},0^{2.7},0^{9.14}]-4-heptadecene, 12-ethylhexacyclo[6,6,1,1^{3.6},1^{10.13},0^{2.7},0^{9.14}]-4-heptadecene, 12-isobutylhexacyclo[6,6,1,1^{3.6},1^{10.13},0^{2.7},0^{9.14}]-4-heptadecene, and 1,6,10-trimethyl-12-isobutylhexacyclo[6,6,1,1^{3.6},1^{10.13},0^{2.7},0^{9.14}]-4-heptadecene.

In the copolymer used in the present invention, the kind of the monomer constituent [A], monomer constituent [B], and monomer constituent [C] contained in the copolymer is not limited to one kind, and plural kinds thereof may be mixed and used together.

The weight-average molecular weight (Mw) of an aromatic-series-containing cyclic olefin-based thermoplastic resin represented by the formula (1) is within a range from 1,000 to 1,000,000, and preferably, within a range from 5,000 to 500,000. A preferable MFR actual measured value of the resin at 260 °C is 0.1 to 300, and more preferably, 0.5 to 250.

The glass transition temperature of the resin varies depending on an application of a product to which a fine pattern is transferred by thermal imprinting, and the temperature of the resin represented by the formula (1) can be adjusted arbitrarily, but it is preferable that such a temperature should be 50 °C to 220 °C from the standpoint of a thermal imprinting process.

A polymerization technique for producing such a resin is not limited to any particular one, but conventionally well-known techniques, such as coordination polymerization using a Ziegler-Natta catalyst or a single-site catalyst, and a technique of hydrogenating the copolymer as needed, can be used. Conventionally well-known techniques can be also applied to hydrogenation, and such techniques can be appropriately carried out using a catalyst containing a metal constituent, such as nickel or palladium. Various kinds of metallocene compounds can be used as the single-single catalyst used for producing the copolymer represented by the formula (1), but methylene (cyclopentadienyl) (tetracyclopentadienyl) zirconium dichloride or the like disclosed in, for example, JP2003-82017A can be appropriately used.

A co-catalyst used for a polymerization reaction is not limited to any particular one, but conventionally well-known methyl aluminoxane can be appropriately used, and polymerization can be carried out with other organic aluminum compounds being present suitably in accordance with a reaction. Such a polymerization reaction can be carried out within a range from a room temperature to 200 °C, but it is desirable to carry out within a range from 40 to 150 °C in consideration of the reactivity and the stability of the catalyst.

An organic solvent used for a polymerization reaction is not limited to any particular one, but for example, an aromatic series solvent, such as benzene, toluene, xylene, or ethylbenzene, and a saturated hydrocarbon series solvent, such as hexane, cyclohexane, heptane, methylcyclohexane, or octane, or, a mixed solvent of those can be appropriately used.

Hetero atoms, such as oxygen atoms and sulfur atoms, can be appropriately introduced by a radical reaction after the foregoing resin is produced. Various kinds of commercially-available cyclic olefin-based resins can be prepared and used for the purpose of the present invention.

The aromatic-series-containing cyclic olefin-based resin used in the present invention can be molded and processed through conventionally well-known techniques like normal thermoplastic resins. For example, using molding devices, such as a uniaxial extruder, a vent-type extruder, a two-screw extruder, a conical two-screw extruder, a kneader, a platificator, a mixtruder, a biaxial conical screw extruder, a planetary gear extruder, a gear type extrude and a screwless extruder, extrusion molding, injection molding, blow molding, or rotational molding can be carried out to acquire a molded body, a sheet, or a film formed in a desired shape.

It is preferable that an injection-molded body of the present invention used for thermal-imprinting applications should have a thickness of 0.5 to 4.0 mm. Moreover, it is preferable that the sheet or the film of the present invention should have a thickness of less than or equal to 500 µm.

An antioxidant, a heat resistance stabilizer, a weathering stabilizer, a light stabilizer, an antistatic agent, a slipping agent, an anti-blocking agent, a leveling agent, an anti-fog additive, a lubricant, a dye compound, a colorant, a natural oil, a synthetic oil, and a wax can be added and mixed in the resin as needed, and the mixture rate can be set arbitrarily. The additives, such as an antioxidant and a lubricant, are not limited to any particular ones, and conventionally well-known compounds can be used appropriately.

In preparing a thermal-imprinting-resin solution, any solvent which can dissolve the resin can be used arbitrarily. Appropriate examples of an aromatic solvent are benzene, toluene, xylene, mesitylene, p-menthane, ethylbenzene, and diethylbenzene, appropriate examples of a hydrocarbon solvent are cyclohexane, methylcyclohexane, and decahydronaphthalene, and appropriate examples of a halogen solvent are dichloromethane, chloroform, chlorobenzene, dichlorobenzene, and trichlorobenzene. Those solvents can be used individually, but greater than or equal to two kinds of those solvents can be combined together appropriately and used. The solvent can be heated in order to dissolve the resin therein. Moreover, in order to improve the solubility of the additives, a tiny amount of alcohol, and ketone can be added without deteriorating the solubility of the resin. The concentration of the resin can be adjusted arbitrarily depending on the thickness of a thin film to be produced.

Regarding how to form a thin film, conventionally well-known techniques, such as spin coating, solution casting, and dipping, can be appropriately applied. Residual volatile compositions in the thin film are a requisition for a resin thin film which can be subjected to thermal imprinting. The thicker the thin film becomes, the more the residual volatile compositions are present after drying, and a foam formation phenomenon is recognized on the resin thin film at the time of thermal imprinting, so that the pattern transfer precision decreases. Therefore, it is preferable that the residual volatile compositions in the thin film should be less than or equal to at least 0.25 %, preferably, should be less than or equal to 0.15 %. As an appropriate film thickness which enables reduction of the residual volatile compositions in the thin film, it is preferable that such a film thickness of the thin film to be formed should be less than or equal to 40 µm.

Various base materials, such as silicon, aluminum, copper, sapphire, glass, and a resin film, can be used arbitrarily, and can be peeled out after a thin film is formed so that the thin film is used alone.

When a foreign material relatively large in comparison with a film thickness is present on the surface of a resin thin film, such a part cannot be pressed sufficiently by a mold, resulting in a transfer failure in some cases. Accordingly, in order to suppress any production of particle-like materials by foreign materials on the surface of the resin thin film, the resin solution can be filtrated through a conventionally well-known technique. For example, when a thin film having a film thickness of greater than or equal to 2 µm is to be formed, if a filter having pores each being less than or equal to 1/2 or so of the thickness of the thin film to be formed is used for filtration, it becomes possible to appropriately eliminate foreign materials and insoluble materials in the resin solution which may cause production of particle-like materials. When it is desirable to suppress any particle-like materials more exquisite, or when a thin film having a film thickness of less than 2 µm is formed, such a control becomes possible by filtration using a filter having pores each being less than 0.8 µm. Note that it is possible to change the material of the filter adequately depending on the kind of the solvent for the resin solution to be used. Moreover, a filter having no charge capturing function can also be used appropriately.

In drying after application of the resin solution, a normal thermal drying technique can be appropriately applied. It is possible to produce a target thin film by performing drying by pressure reduction and drying by heating on a thin film on a substrate, but in order to suppress any foam formation originating from a solvent, it is preferable to perform pre-drying at a temperature lower than the boiling point of the solvent, and then performing drying by rising the temperature. Moreover, thermal deterioration of the resin is suppressed in drying, so that a nitrogen atmosphere or a pressure reduction condition is preferable, but drying in air like a hot plate is also possible. Furthermore, in order to suppress any thermal deterioration at the time of drying at a maximum, an antioxidant may be added to the resin.

In order to suppress any foam formation phenomenon at the time of thermal imprinting, it is preferable to control residual volatile compositions in the resin thin film to be less than or equal to at least 0.25 %, preferably, less than or equal to 0.15 %.

Regarding a work environment for producing the injection-molded body, sheet, and film from the aromatic-series-containing cyclic olefin-based resin of the present invention using various kinds of molding machines, or for forming a thin film from the resin solution of the present invention, a normal molding room and laboratory can be used, but a clean booth or a clean room is more preferable in order to reduce the risk of foreign-material contamination.

Various kinds of products as devices for imprinting are commercially-available, and it is possible to select the type of such a device adequately. A size for a transfer pattern with a requisition of refinement is preferably less than or equal to 10 µm, and more preferably, less than or equal to 1 µm. In order to realize a process which has a good pattern transfer precision and an improved productivity, imprinting conditions which can reduce a cooling time if the temperature of a mold is low and which can reduce a molding time if molding pressure is small and a holding time is short is preferable.

Example applications of the imprinting product are optical devices, such as an optical waveguide, a light guide plate and a diffraction grating, bio-device fields represented by a bio-chip, fluidic devices, such as a micro channel and a micro reactor, medium for saving data, and circuit boards.

### Examples

The present invention will be explained with reference to following examples, but the present invention should not be limited to the following examples.

Note that the weight-average molecular weight (Mw), the number-average molecular weight (Mn), and the molecular weight distribution (Mw/Mn) of a resin used was measured through a gel permeation chromatography technique (GPC) using a GPC device made by Waters under conditions in which column: K-805L/K-806L made by Shodex, column temperature: 40 °C, solvent: chloroform, fluid pass amount: 0.8 mL/min. The glass transition temperature (Tg) of the resin used was acquired from an endothermic peak at the time of rising a temperature using a differential scanning calorimetric analyzer (type: EXSTAR6000, DSC6200) made by Seiko Instruments Inc.. Regarding an MFR actual measurement value [M] at 260 °C, a MELT INDEXER (type: L248-2531) made by SEVEN Co., LTD. was used, and a value with a load of 2.16 kgf was adopted. Regarding dynamic viscoelastic modulus evaluation, a melting viscoelastic modulus measurement device ARES made by TA Instrument Japan was used, and a complex modulus G at the time of resin fluidization at a frequency of 1 rad/sec in a nitrogen stream was measured.

A method of producing a resin used for thermal imprinting evaluation is explained below. A first example was a production method satisfying the foregoing formula (1), and first and second comparative examples were production methods which did not satisfy the formula (1).

### [First Example]

### Production of Copolymer of Ethylene and Methylphenylnorbornene

Under an ethylene atmosphere, toluene, methylphenylnorbornene, methylaluminoxane/toluene solution were put in a reaction tank with a volume of 279 L under conditions that the concentration of 5-methyl-5-phenyl-bicyclo[2,2,1]hept-2-en (methylphenylnorbornene) was 0.80 mol/L, methylaminoxane (made by Nippon Aluminum Alkyls, Ltd., MA020% toluene solution) was 25.0 mmol/L with reference to A1, and the total liquid amount became 95 L.

As a catalyst solution, toluene, methylene (cyclopentadienyl) (tetramethylcyclopentadienyl) zirconiumdichloride, methylaluminoxane/toluene solution were added together and prepared under conditions that the concentration of methylene (cyclopentadienyl) (tetramethylcyclopentadienyl) zirconiumdichloride was 444 µmol/L, methylaluminoxane was 144 mmol/L with reference to Al and a total amount became 5 L.

The catalyst solution was supplied in the polymerization tank small amount by small amount, ethylene was introduced while the pressure was maintained to 0.2 MPa, and reaction was caused for 160 min at 80 °C. During reaction, in accordance with the consumption amount of ethylene, a methylphenylnorbornene/toluene solution prepared to 80 wt% was supplied so that the methylphenylnorbornene concentration in the tank did not decrease. The reaction was terminated when 2.0 L of the catalyst solution, 3.52Nm3 of ethylene, and 25.6 L of methylphenylnorbornene/toluene solution were supplied.

After the termination of the reaction, ethylene was depressurized while the solution was stood to cooling, and the system was substituted with nitrogen. Thereafter, 1567 g of silica (made by Fuji Silysia Chemical Ltd., grade: G-3, grain diameter: 7 µm) having an amount of adsorbed moisture controlled to 10 wt% was added and the solution was reacted for 1 hour. The reaction solution was put in a pressurizing filter (made by Advantec Toyo Kaisha Ltd., type KST-293-20-JA) to which a filter paper (5C, 300 mm) and sellite (WAKO) were set, pressurizing filtration with nitrogen was performed and a polymerized liquid was collected. The polymerized liquid was dripped in acetone in six times its volume small amount by small amount to produce a polymer, and the polymer was precipitated. The precipitated polymer was dissolved in toluene again, and dripped again in acetone in six times its volume small amount by small amount, and a polymer was re-precipitated. The acquired polymer was dried at 120 °C under a vacuumed condition, and it was confirmed through GC measurement after drying that no unreacted monomer remained in the polymer.

The yield of an acquired resin A was 14.1 kg, Mw = 136,000, and Mw/Mn =1.86, and the polymerization activity of this reaction was 174kg-polymer/g-Zr. The glass transition temperature of the polymer was 135 °C.

### [First Comparative Example]

### Production of copolymer of Ethylene and Norbornene

Under a mixed gas atmosphere with a hydrogen/ethylene ratio of 0.002, toluene, norbornene, and methylalminoxane/toluene solution were put in a reaction tank with a volume of 279 L and with a jacket under conditions that the concentration of bicycle[2,2,1]hept-2-en (norbornene) was 2.10 mol/L, methylaluminoxane (made by Nippon Aluminum Alkyls, Ltd., MA020% toluene solution) was 4.0 mmol/L with reference to Al, and a total liquid amount became 130 L.

As a catalyst solution, toluene, methylene (cyclopentadienyl) (tetramethylcyclopentadienyl) zirconiumdichloride, and methylaluminoxane/toluene solution were added together and prepared under conditions that the concentration of methylene (cyclopentadienyl) (tetramethylcyclopentadienyl) zirconiumdichloride was 111 µmol/L, methylaluminoxane was 120 mmol/L with reference to A1, and a total amount became 5 L.

The catalyst solution was supplied to the polymerization tank small amount by small amount, the hydrogen/ethylene ratio at the gaseous phase part in the polymerization tank was controlled to be 0.002, hydrogen and ethylene were introduced while the pressure was maintained to 0.2 MPa, and reaction was caused for 150 min at 70 °C. During reaction, in accordance with the consumption amount of ethylene, a norbornene/toluene solution of 75.92 wt% was supplied so that the norbornene concentration in the tank did not decrease. The reaction was terminated when 3.6 L of the catalyst solution, 4.22Nm3 of ethylene, and 40.6 L of norbornene/toluene solution were supplied.

The solution was processed through the same fashion as the first example except that the amount of acetone used at the time of precipitation of a polymer was changed to three times in its volume.

The yield of an acquired resin B was 21.7 kg, Mw = 122,500, and Mw/Mn = 1.41, and the polymerization activity of this reaction was 603kg-polymer/g-Zr. The glass transition temperature of the polymer was 135 °C.

### [Second Comparative Example]

### Production of Copolymer of Ethylene and Phenylnorbornene

Under an ethylene atmosphere, toluene and a phenylnorbornene/toluene solution was put in an autoclave with a volume of 800 mL under a condition that the concentration of phenylnorbornene was 2.0 mol/L. Methylaluminoxane (made by Nippon Aluminum Alkyls, Ltd., MA020% toluene solution) was added by 5.88 mmol with reference to A1, and methylene (cyclopentadienyl) (tetramethylcyclopentadienyl) zirconiumdichloride was added by 1.5 µmol, ethylene was introduced, and the pressure was maintained to 0.35 MPa, thereby causing reaction for 11 min at 80 °C.

The solution was processed through the same fashion as the first example except that the vacuum drying temperature of a polymer was changed to 100 °C.

The yield of an acquired resin C was 36.9 kg, Mw = 140,000, and Mw/Mn = 1.81, and the polymerization activity of this reaction was 273kg-polymer/g-Zr. The glass transition temperature of the polymer was 135 °C.

As a barometer of resin deterioration which produces particles at the time of thermal imprinting, oxidation-deterioration tolerability of resins of the first example and first and second comparative examples were evaluated. Moreover, as a barometer of pattern transfer characteristic, fluidity of a resin, and dynamic viscoelasticity thereof were evaluated.

### [Evaluation for Oxidation-Deterioration Tolerability of Resin]

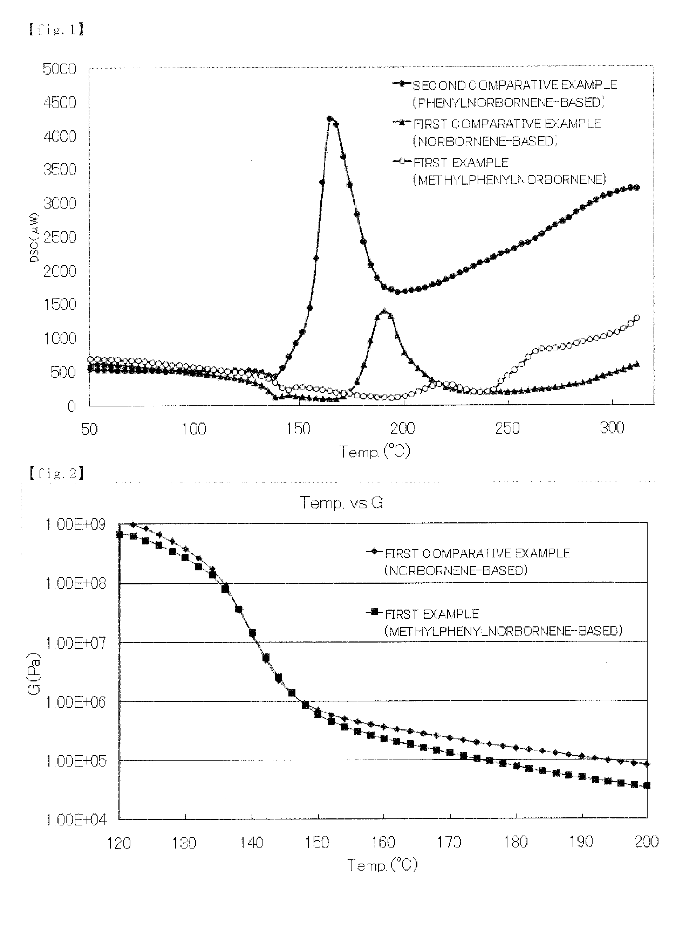

As evaluation for the oxidation-deterioration tolerability of each cyclic olefin-based resin of the first example and the first and second comparative examples having the same glass transition temperature, differential scanning calorimetric (DSC) analysis was carried out. In DSC measurement, a temperature was risen from 30 °C to 320 °C at a temperature-rising rate of 5 °C/min in air (air supply flow rate: 50 mL/min), and an exothermic onset temperature (oxidation onset temperature) together with oxidation-deterioration was measured (see FIG. 1). As shown in table 1, an exothermic peak due to an oxidation reaction became apparent from 166 °C in the case of a norbornene-based resin and from 140 °C in the case of a phenylnorbornene-based resin, so that the oxidation-deterioration tolerability was poor. In contrast, no exothermic peak was present up to 200 °C around in the case of a methylphenylnorbornene-based resin having a methyl radical at a benzyl position of the structure of the first example, and it was confirmed that such a resin was not likely to be oxidized at a higher temperature than other cyclic olefin-based resins having the same glass transition temperature.

**[Table 1]**

| | Comonomer | Tg (°C) | Oxidation Onset Temperature(°C) |
|---|---|---|---|
| First Comparative Example | Norbornene | 135 | 166 |
| Second Comparative Example | Phenylnorbornene | 135 | 140 |
| First Example | Methylphenylnorbornene | 135 | 200 |

### [Evaluation for Fluidity of Resin]

MFR actual measurement values [M] of resins acquired from the first example and the first and second comparative examples at 260 °C were measured (see table 2). The methylphenylnorbornene-based resin of the first example had a better fluidity than the norbornene-based resins of the comparative examples under a high temperature of 260 °C although those resins had the same glass transition temperature.

**[Table 2]**

| | Comonomer | Tg(°C) | Mw | MFR@260°C |
|---|---|---|---|---|
| First Comparative Example | Norbornene | 135 | 122,500 | 12.9 |
| Second Comparative Example | Phenylnorbornene | 135 | 140,000 | *Unmeasurable |
| First example | Methylphenylnorbornene | 135 | 136,000 | 56.5 |

| | | | | |
|---|---|---|---|---|
| *Unmeasurable: decomposition and gelatinization of the resin at 260 °C were excessive and not fluidized, so that measurement was not possible. | | | | |

### [Evaluation for Dynamic Viscoelasticity at the Time of Resin Fluidization]

Through dynamic viscoelasticity measurement of the resins acquired in the first example and the first comparative example, a complex modulus G at the time of resin fluidization was measured (see FIG. 2). As shown in table 3, although the methylphenylnorbornene-based resin of the first example had the same glass transition temperature as that of the norbornene-based resin of the first comparative example, it had a low elastic modulus at the time of resin fluidization, so that improvement of the fluidity and the pattern transfer precision at the time of imprinting can be expected.

**[Table 3]**

| | Comonomer | Tg(°C) | Mw | G (Mpa) /Tg+35°C |
|---|---|---|---|---|
| First Comparative Example | Norbornene | 135 | 122,500 | 0.24 |
| First Example | Methylphenylnorbornene | 135 | 136,000 | 0.13 |

Next, a production method of an injection-molded body and a film used for thermal imprinting evaluation will be explained. Second and third examples are an injection-molded body and a film formed of the resin A satisfying the foregoing formula (1), while third to sixth comparative examples are injection-molded bodies and films formed of a resin which does not satisfy the foregoing formula (1).

Resins of the first example and the first comparative example used for production of an injection-molded body and a film contained 0.6 phr of antioxidant and 0.4 phr of lubricant. Regarding a commercially-available resin pellet, a commercialized product containing an antioxidant and a lubricant was directly used as it was. Addition of the antioxidant was for suppressing any reduction of the physicality originating from oxidation of the resin at the time of heating and production of a gel due to coloration of the resin and bridge formation of resin molecular chains, and disconnection of the resin molecular chains. Addition of the lubricant was for making demolding at the time of injection molding and imprinting easier.

### [Production of Aromatic-Series-Containing-Cyclic-Olefin-based-Resin Molded Body and Film]

### [Second Example]

### (Production of Injection-Molded Body)

The resin A (ethylene/methylphenylnorbornene-based copolymer, MFR @ 260 °C: 56.5, Mw: 136,000, and Tg: 135 °C) of the first example was subjected to injection molding, and a transparent injection-molded body having a thickness of 2 mm was produced.

### [Third Example]

### (Production of Film)

The resin A (ethylene/methylphenylnorbornene-based copolymer, MFR @ 260 °C: 56.5, Mw: 136,000, and Tg: 135 °C) of the first example was subjected to molding by a film molding apparatus, and a transparent film having a thickness of 100 µm was produced.

### [Production of Cyclic-Olefin-based-Resin Molded body and Film]

### [Third Comparative Example]

### (Production of Injection-Molded Body)

The resin B (ethylene/norbornene-based copolymer, MFR @ 260 °C: 41.4, Mw: 86,500, and Tg: 135 °C) of the first comparative example was subjected to injection molding, and a transparent injection-molded body having a thickness of 2 mm was produced.

### [Fourth Comparative Example]

### (Production of Injection-Molded Body)

A resin pellet D of a commercially-available cyclic olefin-based ring-opening polymer (hydrogenated body of ethylene/norbornene-based ring-opening polymer, MFR @ 260 °C: 7.7, and Tg: 138 °C) was used to produce a transparent injection-molded body having a thickness of 2 mm.

### [Fifth Comparative Example]

### (Production of Film)

The resin B (ethylene/norbornene-based copolymer, MFR @ 260 °C: 12.9, Mw: 122,500, and Tg: 135 °C) of the first comparative example was subjected to molding by a film molding apparatus, and a transparent film having a thickness of 100 µm was produced.

### [Sixth Comparative Example]

### (Production of Film)

A resin pellet D of a commercially-available cyclic olefin-based ring-opening polymer (hydrogenated body of ethylene/norbornene-based ring-opening polymer, MFR @ 260 °C: 7.7, and Tg: 138 °C) was subjected to molding by a film molding apparatus, and a transparent film having a thickness of 110 µm was produced.

### [Evaluation for Thermal Imprinting of Molded Body and Film]

Evaluation for thermal imprinting was made for the molded bodies and films of the second and third examples and the third to sixth comparative examples. An imprinting device (VX-2000N-US) made by SCIVAX Corporation was used to perform thermal imprinting, each film was fixed on a substrate heated to the glass transition temperature of the resin Tg - 23 °C, a mold (nano-honeycomb pattern of 750 nm by 750 nm, wall width: 250 nm, depth: 370 nm) heated to a molding setting temperature Tg + 30 °C beforehand was used to perform thermal imprinting, and when the pattern of the mold was precisely transferred, it is indicated in table 4 by a circular mark, and when particle-like materials were produced on the resin surface and the pattern transfer precision was poor, it is indicated by a cross mark (see table 4).

**[Table 4]**

| Resin Molded Plate or Film | Thickness (mm) | Thermal Imprinting Evaluation |
|---|---|---|
| Second Example | 2 | ○ |
| Third Example | 0.10 | ○ |
| Third Comparative Example | 2 | × |
| Fourth Comparative Example | 2 | × |
| Fifth Comparative Example | 0.10 | × |
| Sixth Comparative Example | 0.11 | × |

Thermal imprinting failures due to production of particle-like materials were observed in the case of the third to sixth comparative examples, but particle-like materials were extremely little in the case of the second and third examples, so that the pattern of the mold was transferred precisely.

An explanation will be given of a production method of a resin solution and a resin thin film both used for thermal imprinting evaluation. Fourth to sixth examples are a resin solution of the resin A of the first example satisfying the formula (1), while eighth to tenth comparative examples are a resin solution of a resin which did not satisfy the foregoing formula (1). A seventh comparative example is a resin solution of the fourth example produced without filtration.

### [Preparation of Aromatic-Series-Containing-Cyclic-Olefin-based-Resin Solution]

### [Fourth Example]

4 pts.wt. of the powders of the resin A (ethylene/methylphenylnorbornene-based copolymer, MFR @ 260 °C: 56.5, Mw: 136,000, and Tg: 135 °C) of the first example and 0.004 pts.wt. of antioxidant (IRGANOX1010 made by Ciba Specialty Chemicals Corporation) were agitated and dissolved in 96 pts.wt. of decahydronaphthalene at a room temperature in a flask subjected to drying and nitrogen substitution, the solution was filtrated by a nylon-made filter (PhotoShield N made by CUNO corporation) with pores each having a diameter of 0.04 µm, thereby preparing an aromatic-series-containing-cyclic-olefin-based-resin solution for thermal imprinting.

### [Fifth Example]

An aromatic-series-containing-cyclic-olefin-based-resin solution for thermal imprinting was prepared through the same resin and the same fashion except that the mixing amount of the antioxidant (IRGANOX1010 made by Ciba Specialty Chemicals Corporation) of the forth example was changed to 0 pts.wt..

### [Sixth Example]

An aromatic-series-containing-cyclic-olefin-based-resin solution for thermal imprinting was prepared through the same fashion except that the mixing amounts of the resin A powder, the antioxidant, and the solvent were changed to 3 pts.wt. of resin A powder, 0.003 pts.wt. of antioxidant, and 97 pts.wt. of decahydronaphthalene, respectively.

### [Seventh Comparative Example]

An aromatic-series-containing-cyclic-olefin-based-resin solution for thermal imprinting was prepared through the same resin and the same fashion without filtration by the nylon-made filter (PhotoShield N made by CUNO Corporation) with pores each having a diameter of 0.04 µm of the fourth embodiment.

### [Preparation of Cyclic-Olefin-based-Resin Solution]

### [Eighth Comparative Example]

3.5 pts.wt. of the powders of the resin B (ethylene/norbornene-based copolymer, MFR @ 260 °C: 12.9, Mw: 122,500, and Tg: 135 °C) of the first comparative example and 0.0035 pts.wt. of antioxidant (IRGANOX1010 made by Ciba Specialty Chemicals Corporation) were agitated and dissolved in 96 pts.wt. of decahydronaphthalene at a room temperature in a flask subjected to drying and nitrogen substitution, the solution was filtrated by a nylon-made filter (PhotoShield N made by CUNO corporation) with pores each having a diameter of 0.04 µm, thereby preparing an olefin-based-resin solution for thermal imprinting.

### [Ninth Comparative Example]

A cyclic-olefin-based-resin solution for thermal imprinting was prepared through the same resin and the same fashion except that the mixing amount of the antioxidant (IRGANOX1010 made by Ciba Specialty Chemicals Corporation) of the eighth comparative example was changed to 0 pts.wt..

### [Tenth Comparative Example]

3.5 pts.wt. of a commercially-available cyclic olefin-based resin pellet E (ethylene/norbornene-based copolymer, MFR @ 260 °C: 13.0, and Tg: 138 °C) was agitated and dissolved in 96.5 pts.wt. of decahydronaphthalene at a room temperature in a flask subjected to drying and nitrogen substitution, the solution was filtrated by a nylon-made filter (PhotoShield N made by CUNO corporation) with pores each having a diameter of 0.2 µm, and the filtrated solution was further filtrated by a nylon-made filter (PhotoShield N made by CUNO corporation) with pores each having a diameter of 0.04 µm, thereby preparing a cyclic-olefin-based-resin solution for thermal imprinting.

### [Evaluation for Particle in Resin Solution]

Regarding the thermal-imprinting resin solutions of the fourth example and the seventh comparative example, distributions of diameters of grains contained in the solution were measured through a particle counter (KS-40B made by RION Corporation), and the number of particles with a size greater than or equal to 0.2 µm per 1 cm³ of solution is shown in table 5.

**[Table 5]**

| Thermal-Imprinting Resin Solution | Number of particles with diameter greater than or equal to 0.2 µm (particle/1 cm³) |
|---|---|
| Fourth Example | 7.1 |
| Seventh Comparative Example | 3×10³ |

### [Production of Resin Thin Film and Evaluation for Particle on Thin Film]

Using a spin coater (SC-300 made by EHC Corporation), the resin solutions of the fourth to seventh examples were respectively applied on a 4-inch silicon wafer under a spin coat condition of 400 rpm × 5 sec + 4000 rpm × 20 sec, the solvent was eliminated by drying by heating, and aromatic-series-containing-cyclic-olefin-based-resin thin films for thermal imprinting were respectively produced (seventh to tenth examples). For comparison, resin thin films were formed using the resin solutions of the seventh to tenth comparative examples through the same fashion (eleventh to fifteenth comparative examples). Moreover, using the resin solution of the fourth example, an aromatic-series-containing-cyclic-olefin-based-resin thin film for thermal imprinting was produced on a glass substrate by solution casting (eleventh example).

Dying by heating were carried out through the following three kinds of schemes.

First drying by heating (vacuum drying): in nitrogen stream, the wafer was pre-dried for 10 min at 100 °C, a pressure was reduced to less than or equal to 1 torr at a room temperature in a vacuum heating/drying apparatus, the temperature was risen to 200 °C, and the wafer was maintained in a pressure reduction condition for 20 min. The wafer was stood to cooling to a room temperature with the interior of the drying apparatus being maintained to less than or equal to 1 torr, depressurized with nitrogen, and the resin-thin-film-coated wafer was then ejected.

Second drying by heating (hot air circulation drying): in nitrogen stream, the wafer was pre-dried for 10 min at 100 °C in a hot air circulation drying apparatus, subjected to actual drying for 30 min at 200 °C, subjected to anneal heating for 30 min at the glass transition temperature of the resin + 30 °C, and the resin-thin-film-coated wafer was then ejected.

Third drying by heating (hot plate drying): on a hot plate in air, the wafer was pre-dried for 10 min at 100 °C, subjected to actual drying for 30 min at 200 °C, subjected to anneal heating for 30 min at the glass transition temperature of the resin + 10 °C, and the resin-thin-film coated wafer was then ejected.

Note that a film thickness was measured using an automatic ellipsometer (MARY-102FM) made by FIVE LAB Corporation. Moreover, a resin surface after film formation was observed using a microscope (VH-X450) made by KEYENCE Corporation, when no particle-like material was observed, it is indicated in table 6 by a circular mark, and when such particle-like materials were notably observed, it is indicated by a cross mark (table 6).

**[Table 6]**

| Resin Thin Film | Resin Solution | Scheme of Drying by Heating | Resin Film Thickness (nm) | Evaluation for Particle on Thin Film |
|---|---|---|---|---|
| Seventh Example | Fourth Example | First Drying by Heating | 100 | ○ |
| Eighth Example | Fourth Example | Third Drying by Heating | 100 | ○ |
| Ninth Example | Fifth Example | Third Drying by Heating | 100 | ○ |
| Tenth Example | Sixth Example | Second Drying by Heating | 69 | ○ |
| Eleventh Example | Fourth Example | Second Drying by Heating | 4000 | ○ |
| Eleventh Comparative Example | Seventh Comparative Example | First Drying by Heating | 100 | × |
| Twelfth Comparative Example | Eighth Comparative Example | First Drying by Heating | 100 | ○ |
| Thirteenth Comparative Example | Eighth Comparative Example | Third Drying by Heating | 100 | ○ |
| Fourteenth Comparative Example | Ninth Comparative Example | Third Drying by Heating | 100 | ○ |
| Fifteenth Comparative Example | Tenth Comparative Example | Second Drying by Heating | 96 | ○ |

According to the resin thin film of the eleventh comparative example, particle-like materials were observed on the resin surface after thin film formation.

### [Evaluation for Heat-Deterioration of Resin Thin Film]

Regarding evaluation for heat deterioration of a resin thin film formed on a 4-inch silicon wafer or a glass substrate after drying by heating, 3 µL of pure water was dripped on the thin film, and a contact angle was measured. A contact angle measurement device (FAMAS) made by KYOWA Interface Science Corporation was used for measurement of a contact angle. Furthermore, for evaluation of heat-deterioration of a resin thin film, a resin thin film formed on a silicon wafer or a glass substrate was dissolved again by rinsing with toluene at a room temperature, when no toluene-undissolved component was observed, it is indicated in table 7 by a circular mark, and when undissolved components were observed, it is indicated by a cross mark (table 7).

**[Table 7]**

| Resin Thin Film | Scheme of Drying by Heating | Resin Film Thickness (nm) | Contact angle (°) | Thin Film Toluene Re-dissolving |
|---|---|---|---|---|
| Seventh Example | First Drying by Heating | 100 | 93 | ○ |
| Eighth Example | Third Drying by Heating | 100 | 92 | ○ |
| Ninth Example | Third Drying by Heating | 100 | 93 | ○ |
| Tenth Example | Second drying by Heating | 69 | 93 | ○ |
| Eleventh Example | Second Drying by Heating | 4000 | 92 | ○ |
| Eleventh Comparative Example | First Drying by Heating | 100 | *Unmeasur able | ×(Particle-like materials present) |
| Twelfth Comparative Example | First Drying by Heating | 100 | 99 | ○ |
| Thirteenth Comparative Example | Third Drying by Heating | 100 | 97 | ×(Undissolved component present) |
| Fourteenth Comparative Example | Third Drying by Heating | 100 | 89 | ×(Undissolved component present) |
| Fifteenth Comparative Example | Second Drying by Heating | 96 | 98 | ○ |

| | | | | |
|---|---|---|---|---|
| *Unmeasurable: dispersion in water-contact-angle measured values was large due to particle-like materials on the resin surface and quantification evaluation was not possible. | | | | |

According to the cyclic-olefin-based-resin thin films of the twelfth to fifteenth comparative examples, in the case of the third drying by heating in air using a hot plate, reduction of a contact angle due to surface oxidation of the resin and production of toluene-undissolved components were observed in comparison with the first and second drying by heating in a vacuum condition or in nitrogen stream.

In contrast, according to the aromatic-series-containing-cyclic-olefin-based-resin thin films of the seventh to eleventh examples, there was no difference in a contact angle between the third drying by heating in air using a hot plate and the first and second heating by drying in a vacuum condition or in nitrogen stream, and no toluene-undissolved component was observed.

### [Evaluation for Thermal Imprinting of Resin Thin Film]

Under the thin film production condition of the eleventh example, a sixteenth comparative example of forming a thin film with a dry time being shortened was carried out (drying for 10 min at 200 °C). Evaluation for thermal imprinting was made using thin films of the seventh to eleventh examples and twelfth to sixteenth comparative examples. An imprinting device (VX-2000N-US) made by SCIVAX Corporation was used for evaluation for thermal imprinting, each thin film was fixed on a substrate heated at the glass transition temperature of the resin Tg - 20°C, a mold (nano-honeycomb pattern of 750 nm by 750 nm, wall width: 250 nm, and depth: 370 nm) heated at a molding setting temperature Tg + 30 °C beforehand was used to perform thermal imprinting. When the pattern of the mold was transferred precisely, it is indicated in table 8 by a circular mark, and when the transfer precision was poor, it is indicated by a cross mark (table 8). Note that the residual volatile compositions in the resin thin film was analyzed and quantified through gas chromatography by re-dissolving the thin film with toluene.

**[Table 8]**

| Resin Thin Film | Resin Film Thickness (nm) | Residual Volatile Component (ppm) | Thermal Imprinting Evaluation |
|---|---|---|---|
| Seventh Example | 100 | < 10 | ○ |
| Eighth Example | 100 | <10 | ○ |
| Ninth Example | 100 | <10 | ○ |
| Tenth Example | 69 | <10 | ○ |
| Eleventh Example | 4000 | 1532 | ○ |
| Twelfth Comparative Example | 100 | <10 | × |
| Thirteenth Comparative Example | 100 | <10 | × |
| Fourteenth Comparative Example | 100 | < 10 | × |
| Fifteenth Comparative Example | 96 | < 10 | × |
| Sixteenth Comparative Example | 4000 | 2800 | × |

| | | | |
|---|---|---|---|
| Note that "< 10" in the table means less than 10 ppm. | | | |

According to the twelfth to fifteenth comparative examples, thermal imprinting failures were observed due to production of particle-like materials. Moreover, according to the sixteenth comparative example, the thin film foamed at the time of thermal imprinting, and no pattern transfer was accomplished at all. According to the foregoing result, it is suggested that residual volatile components in a thin film must be less than or equal to at least 0.25 %, preferably, less than or equal to 0.15 % in order to perform thermal imprinting appropriately.

In contrast, according to the seventh to eleventh examples, particle-like materials were quite little, the pattern of the mold was precisely transferred, and an aromatic-series-containing-cyclic-olefin-based-resin thin film for thermal imprinting which had little heat deterioration and which was able to cope with various drying by heating was thus formed.

As explained above, according to the present invention, there are provided an aromatic-series-containing cyclic olefin-based resin and a solution thereof.

## Claims

1. A thermal-imprinting resin used for thermal imprinting, wherein
an exothermic onset temperature (oxidation onset temperature) at an exothermic peak due to oxidation is higher than or equal to a glass transition temperature of the resin + 35 °C in air in differential scanning calorimetric measurement at a rate of temperature rise of 5 °C/min.

2. The thermal-imprinting resin according to claim 1, formed of a cyclic olefin-based resin.

3. The thermal-imprinting resin according to claim 1, containing at least one repeating unit represented by a formula (1). 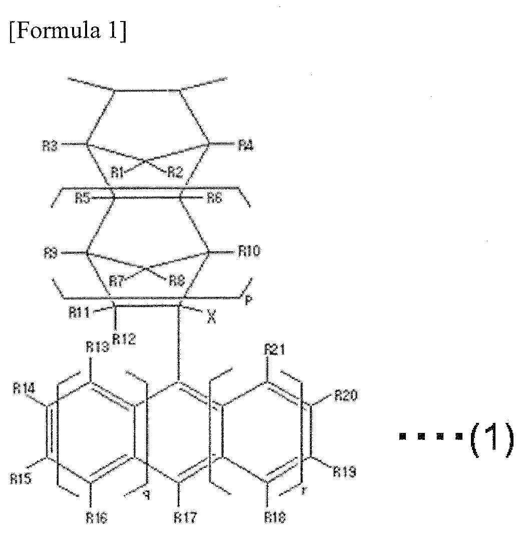 (where X in the formula (1) is a halogen atom or a hydrocarbon group having a carbon number of 1 to 12. X and R21 (or R20) may be bound together through an alkylene group. p, q, r are 0, 1, or 2. R1 to R21 are individually a hydrogen atom, a halogen atom, an aliphatic hydrocarbon group, and an alicyclic hydrocarbon group. R11 (or R12) and R13 (or R14) may be bound together through an alkylene group having a carbon number of 1 to 5, and may be bound directly together without any group. However, when R11 (or R12) and R13 (or R14) are bound together without any group, R11 (or R12) which is a residue not subjected to binging is a halogen atom or a hydrocarbon group having a carbon number of 1 to 12, and R13 (or R14) which is also a residue not subjected to binding is a hydrogen atom, a halogen atom, an aliphatic hydrocarbon group, or an alicyclic hydrocarbon group)

4. The thermal-imprinting resin according to any one of claims 1 to 3, wherein a complex modulus at the glass transition temperature of the resin + 35 °C is less than 0.24 MPa in dynamic viscoelastic modulus measurement at a frequency of 1 rad/sec in nitrogen stream.

5. A thermal-imprinting-resin solution comprising the thermal-imprinting resin according to any one of claims 1 to 3, and greater than or equal to at least one kind of solvent which can dissolve the resin.

6. The thermal-imprinting-resin solution according to claim 5, wherein a containing amount of foreign particles each having a grain diameter of larger than or equal to 0.2 µm is less than 3000 particles/cm³.

7. The thermal-imprinting-resin solution according to claim 5, having undergone filtration by a filter having pores each having a diameter of less than 0.8 µm.

8. A thermal-imprinting injection-molded body produced from the thermal-imprinting resin according to any one of claims 1 to 3.

9. A thermal-imprinting thin film produced from the thermal-imprinting resin according to any one of claims 1 to 3.

10. A thermal-imprinting thin film produced from the thermal-imprinting-resin solution according to any one of claims 5 to 7.

11. The thermal-imprinting thin film according to claim 10, wherein residual volatile components are less than or equal to 0.25 %.

12. The thermal-imprinting thin film according to claim 10, wherein a film thickness is less than or equal to 40 µm.

13. A method of producing a thermal-imprinting-resin thin film, comprising:
applying the thermal-imprinting-resin solution according to claim 5 on a support base material; and
drying the thermal-imprinting-resin solution until residual volatile components become less than or equal to 0.25 %.

14. The thermal-imprinting-resin-thin-film production method according to claim 13, wherein a film thickness of the thin film is less than or equal to 40 µm.

15. The thermal-imprinting-resin-thin-film production method according to claim 13, wherein a film thickness of the thin film is 10 mn to 4000 nm, and the thermal-imprinting-resin solution was applied by spin coating.
